# FASCICULE DE BREVET EUROPEEN

(11) **EP 4 251 469 B1**
(45) Date de publication et mention de la délivrance du brevet: **28.05.2025**
(21) Numéro de dépôt: 21823642.0
(22) Date de dépôt: 22.11.2021
(51) Int. Cl.: B60N 2/68, F16B 2/06, F16B 35/06

(54) **DISPOSITIF DE FIXATION D'UN TUBE SUR UN SUPPORT**
VORRICHTUNG ZUM BEFESTIGEN EINES ROHRES AUF EINEM HALTER
DEVICE FOR ATTACHING A TUBE ONTO A HOLDER

(30) Priorité: 30.11.2020 FR 2012416
(43) Date de publication de la demande: 04.10.2023
(73) Titulaire: Safran Seats, 78370 Plaisir (FR)
(72) Inventeur: CAUQUIL, Samuel, 77550 Moissy-Cramayel (FR); BEVING, Pascal, 77550 Moissy-Cramayel (FR)
(74) Mandataire: Cabinet Camus Lebkiri
(86) Numéro de dépôt international: PCT/FR2021/052057
(87) Numéro de publication internationale: WO 2022/112698

(56) Documents cités:
- GB-A- 2 200 401
- GB-A- 560 154
- JP-A- S4 958 421
- JP-A- S6 023 610

## Description

Le domaine technique de l'invention est celui des dispositifs de fixation et plus particulièrement les fixations entre un tube et un support, ce support pourra, par exemple, être une crosse d'une structure de siège d'avion.

### ARRIERE-PLAN TECHNOLOGIQUE DE L'INVENTION

Les fixations de poutres cylindriques ou de tubes sur des supports, métalliques ou non, sont faites par le serrage d'une simple vis traversant ces deux éléments. La vis n'exerce donc une pression qu'au niveau de sa tête et de ses filets ce qui a pour effet de « pincer » le support autour du tube et ne répartit par le serrage sur toute la périphérie de celui-ci. Ce simple serrage radial du tube dans le support induit une pression mal répartie sur sa périphérie et ainsi une ovalisation de celui-ci. Ce qui a comme conséquences, un couple de serrage mal maitrisé ainsi que des bruits de grincements lorsqu'un effort est exercé à cause des jeux entre le tube et le support induits par ce mode de serrage. L'assemblage perd alors en rigidité et n'assure donc pas une transmission optimale des efforts.

Ceci est encore plus gênant quand cette fixation concerne un siège où des bruits de grincements apparaissent lorsqu'un utilisateur s'assoit ou manipule le siège. GB2200401A divulgue un dispositif de fixation connu.

### RESUME DE L'INVENTION

L'invention offre une solution aux problèmes évoqués précédemment, en permettant une meilleure répartition des forces sur toute la périphérie du tube et ainsi améliorer la rigidité de la fixation.

Le dispositif de fixation d'un tube sur un support selon l'invention comprend le tube, le support, une vis traversante et un écrou, le support recevant le tube dans un logement cylindrique percé transversalement par un orifice, le tube ayant deux perçages disposés en vis-à-vis, la vis passant par l'orifice et les deux perçages et solidarisant le tube et le support, il est caractérisé en ce que le logement cylindrique du support présente une fente longitudinale disposée en vis-à-vis de l'orifice, la fente ayant deux bords internes disposés du côté du logement et deux bords externes disposés du côté opposé au logement, l'écrou comportant au moins une face inclinée, chaque bord externe présentant un renvoi d'angle coopérant avec la face inclinée de l'écrou. Le serrage de la vis sur l'écrou provoque le serrage des bords de la fente sur le tube, le logement cylindrique se referme sur le tube en permettant un contact de toute la surface du logement sur la surface du tube et ainsi de mieux répartir les efforts.

Selon un premier mode de réalisation la face inclinée est conique. Dans ce cas, l'écrou peut être circulaire et donc peu encombrant. Chaque renvoi d'angle sera alors de forme semi conique.

Selon un deuxième mode de réalisation, l'écrou a deux faces inclinées disposées en vis-à-vis. Les deux faces inclinées permettent d'avoir une surface d'appui sur toute l'épaisseur du support. Les renvois d'angle seront alors de forme plane.

Avantageusement, le tube et le logement cylindrique ont une section circulaire. Une section circulaire du tube et du logement cylindrique facilite le montage du tube qui peut être inséré dans n'importe quelle position et ainsi le serrage du logement cylindrique sur le tube. Un tube et un logement de section ovale permet cependant de bloquer le tube en rotation.

Avantageusement, le support est métallique. La métal permet une certaine souplesse qui permet au support à la fois de se déformer pour enserrer le tube et reprendre sa forme d'origine si on doit démonter le tube du support.

Avantageusement, le tube est métallique. Le métal est assez résistant tout en restant assez souple.

Avantageusement, le tube est en matériau composite. Les matériaux composites sont plus légers et plus résistants et particulièrement adaptés pour les application aéronautiques.

Avantageusement, le support est une crosse. Le support a une forme courbée en forme de coude et la fixation peut être faite indifféremment à chaque extrémités ou à l'endroit du coude.

Avantageusement, la crosse constitue un élément d'un siège. Le siège pourra par exemple être un siège d'avion.

Siège comprenant un dispositif de fixation avec au moins une des caractéristiques précédentes. Dans ce cas le siège est constitué d'au moins deux crosses reliées par au moins un tube, de préférence trois tubes.

### BREVE DESCRIPTION DES FIGURES

Les figures sont présentées à titre indicatif et nullement limitatif de l'invention.
[Fig. 1] est une coupe d'un dispositif de fixation d'un tube dans un support selon l'état de la technique ;
[Fig. 2] est une vue de côté d'un support avec un dispositif de fixation selon l'invention;
[Fig. 3] est une vue arrière de la figure 2 ;
[Fig. 4] est une coupe partielle du côté du dispositif selon l'invention ;
[Fig. 5] est une vue en perspective d'un dispositif selon l'invention ;
[Fig. 6] est une vue de côté d'un autre support avec un écrou ;
[Fig. 7] est une vue de côté du support de la figure 6 avec la vis, l'écrou et le tube.

### DESCRIPTION DETAILLEE

Les figures sont présentées à titre indicatif et nullement limitatif de l'invention.

Sauf précision contraire, un même élément apparaissant sur des figures différentes présente une référence unique.

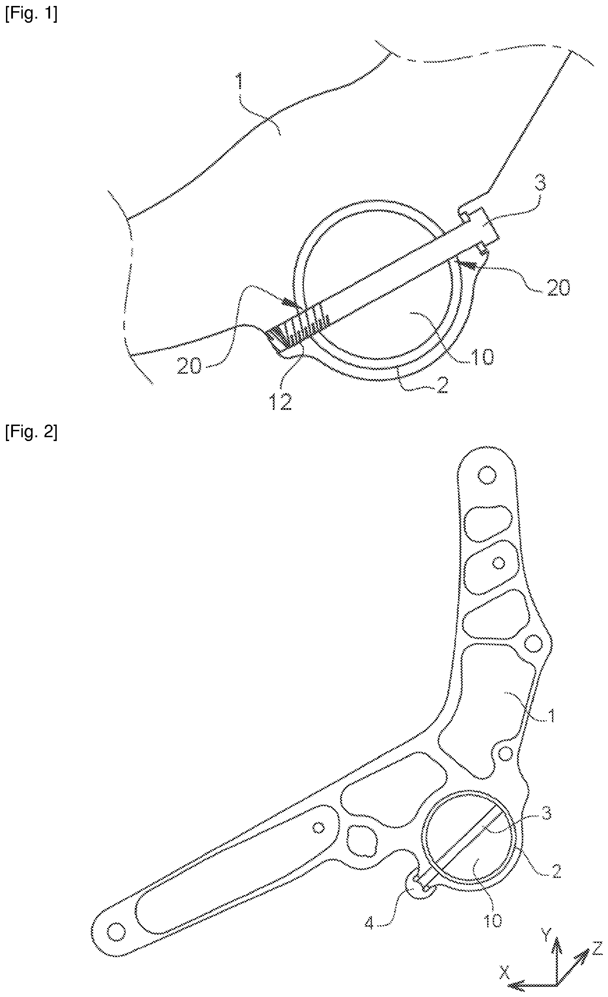

Dans toute la description on appellera « coté » , le plan XY illustré figure 2, l'avant étant disposé du coté gauche de cette figure.

Le dispositif de fixation de l'état de la technique de la figure 1 comprend un support 1, un tube 2 et une vis 3. Le tube 2 est inséré dans un logement cylindrique 10 prévu à cet effet dans le support 1 d'épaisseur e. Une vis 3 vient solidariser l'ensemble en traversant le tube 2 par deux perçages 20 disposés en vis-à-vis, et le support 1 par un orifice 11 et un trou taraudé 12.

Cette simple vis n'exerce donc une pression qu'au niveau de sa tête et de ses filets ce qui a pour effet de « pincer » le support autour du tube et ne répartit pas le serrage sur toute la périphérie de celui-ci. On peut voir ici que la liaison ne tient qu'au niveau des deux perçages 20, d'où des contraintes importantes à cet endroit qui peuvent déformer le tube 2. Cette déformation, une ovalisation du tube 2, a pour conséquences un couple de serrage mal maitrisé, des jeux entre le tube et le support induit par ce mode de serrage, l'assemblage perd alors en rigidité et n'assure donc pas une transmission des efforts optimale.

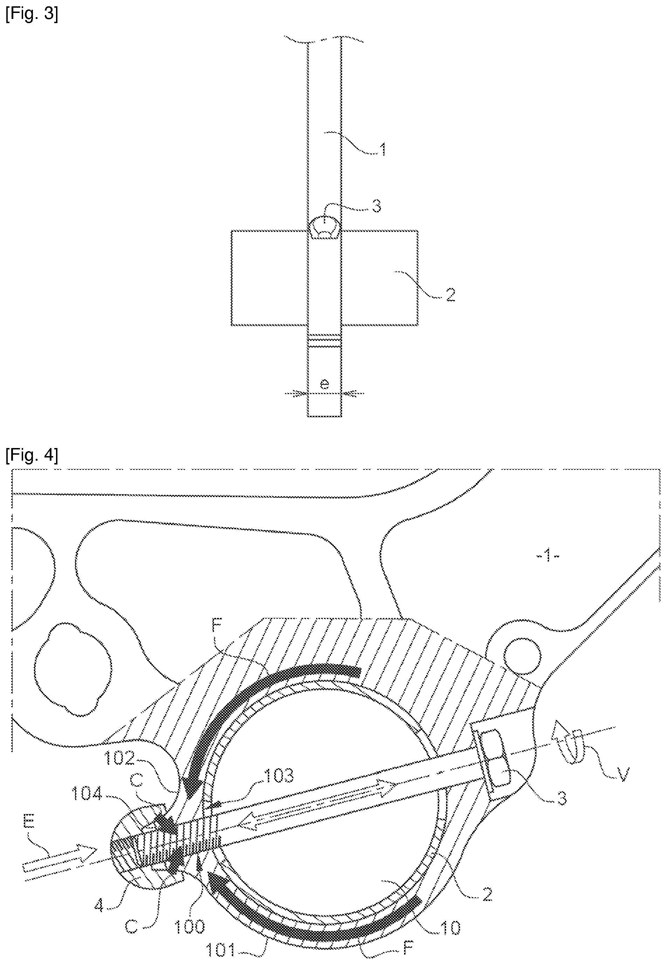

Sur le dispositif de serrage selon l'invention illustré aux figures 3 à 5, le support 1 comprend un logement cylindrique 10 avec une fente longitudinale 100 qui divise le logement 10 en deux branches 101 et 102. Ici, la branche 101 est flexible afin de pouvoir se refermer sur l'autre branche 102. La fente 100 présente un bord interne 103 et un bord externe 104.

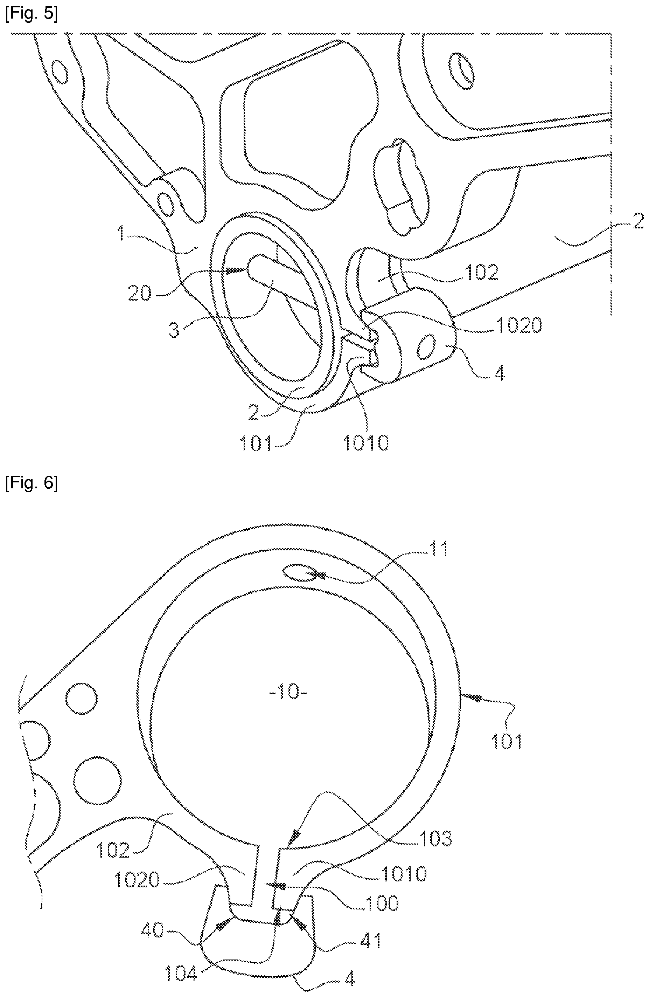

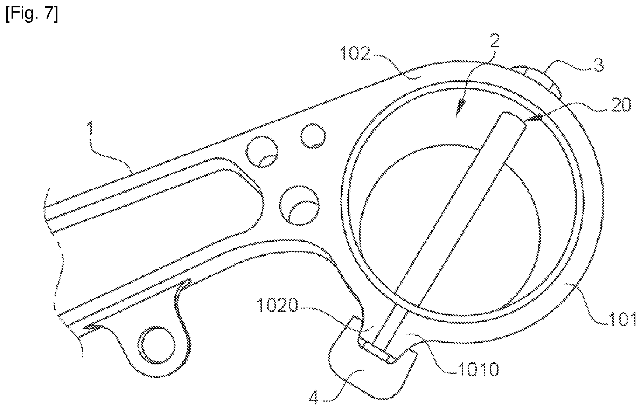

Chacune des deux branches 101 et 102 se termine par un renvoi d'angle 1010 et 1020, placés en saillie sur un bord externe 104 de la fente 100. L'écrou 4 a deux faces inclinées 40 et 41 destinées à coopérer avec les renvois d'angle 1010 et 1020 et inclinées vers la partie taraudée de l'écrou 4. Ces renvois d'angles 1010 et 1020 se prolongent sur toute l'épaisseur e du support 1. Sur les figures 6 et 7, les deux branches 101 et 102 sont flexibles.

Le logement cylindrique 10 comprend également un orifice 11 disposé en vis-à-vis de la fente longitudinale 100 (cf. figure 6). Le tube 2 est également troué de deux perçages 20 disposés face à face.

L'écrou 4 se présente sous la forme d'un segment de la longueur de l'épaisseur e du support 1. Un de ses cotés comporte deux faces inclinées 40 et 41. L'inclinaison des faces 40 et 41 est sensiblement identique à celle des renvois d'angle.

Nous allons maintenant décrire l'assemblage du tube 2 sur le support 1. On introduit le tube 2 dans le logement cylindrique 10 du support 1, une fois les perçages 20 en face de l'orifice 11, on insère la vis 3 dans l'orifice 11, les perçages 20 et la fente longitudinale 100.

Une fois la vis 3 introduite, on visse l'écrou 4 à l'extrémité de la vis 3 selon la flèche V. Le serrage de l'écrou 4 va rapprocher celui-ci des renvois d'angle 1010 et 1020 (flèche E), une fois que ses faces inclinées 40 et 41 vont être en contact avec les renvois d'angle 1010 et 1020 (flèche C), le rapprochement de l'écrou 4 du support va entrainer un appui des faces inclinés 40, 41 sur chacun des renvois d'angle 1010 et 1020. L'appui de plus en plus important des plans inclinés 40, 41 au fur et à mesure du serrage de l'écrou 4 va provoquer la fermeture progressive des deux branches 101 et 102 jusqu'à ce que le tube 2 soit suffisamment serré (flèche F).

Dans l'exemple des figures 6 et 7, les deux branches 101 et 102 sont flexibles, ce qui permet un meilleur serrage du tube 2.

D'autres formes de support ou d'écrou sont possibles, on peut par exemple avoir un écrou avec une face conique creuse qui coopère avec deux demi-cônes en saillie sur les bords externes 104 de la fente 100.

Ce dispositif de fixation est particulièrement bien adapté pour les sièges d'avion comportant des éléments structurels, tels que des crosses et des poutres. Les crosses comportent une zone de passage de la poutre et la fixation de l'ensemble est effectuée au moyen d'une vis traversant des ouvertures ménagées dans la poutre et la crosse. La crosse correspond ainsi au support et la poutre au tube.

En général les sièges d'avions comportent plusieurs places individuelles séparées par des accoudoirs. Chaque place est séparée de la suivante par une crosse, il y a ainsi par exemple quatre crosses pour trois places. Les crosses sont reliées entre elles par un ou plusieurs tubes ou poutres. On peut par exemple avoir un tube au niveau de l'assise, un au niveau du dossier et un à l'intersection de l'assise et du dossier.

## Revendications

1. Dispositif de fixation d'un tube (2) sur un support (1), comprenant le tube (2), le support (1), une vis (3) traversante et un écrou (4), le support (1) recevant le tube (2) dans un logement cylindrique (10) percé transversalement par un orifice (11), le tube (2) ayant deux perçages (20) disposés en vis-à-vis, la vis (3) passant par l'orifice (11) et les deux perçages (20) et solidarisant le tube (2) et le support (1), le logement cylindrique (10) du support (1) présentant une fente longitudinale (100) disposée en vis-à-vis de l'orifice (11), la fente (100) ayant deux bords internes disposés du côté du logement (10) et deux bords externes disposés du côté opposé au logement (10), l'écrou (4) comportant au moins une face inclinée (40, 41), chaque bord externe présentant un renvoi d'angle (1010, 1020) coopérant avec la face inclinée (40, 41) de l'écrou (4).

2. Dispositif de fixation selon la revendication 1, **caractérisé en ce que** la face inclinée est conique.

3. Dispositif de fixation selon la revendication 1, **caractérisé en ce que** l'écrou (4) a deux faces inclinées (40, 41) disposées en vis-à-vis.

4. Dispositif de fixation selon l'une des revendications précédentes, **caractérisé en ce que** le tube (2) et le logement cylindrique (10) ont une section circulaire.

5. Dispositif de fixation selon l'une des revendications précédentes, **caractérisé en ce que** le support (1) est métallique.

6. Dispositif de fixation selon l'une des revendications précédentes, **caractérisé en ce que** le tube (2) est métallique.

7. Dispositif de fixation selon une des revendications 1 à 5, **caractérisé en ce que** le tube (2) est en matériau composite.

8. Dispositif de fixation selon l'une des revendications précédentes, **caractérisé en ce que** le support (1) est une crosse.

9. Dispositif de fixation selon la revendication précédente, **caractérisé en ce que** la crosse constitue un élément d'un siège.

10. Siège comprenant un dispositif de fixation selon l'une des revendications précédentes.

## Patentansprüche

1. Vorrichtung zur Befestigung eines Rohrs (2) an einem Träger (1), umfassend das Rohr (2), den Träger (1), eine durchgehende Schraube (3) und eine Mutter (4), wobei der Träger (1) das Rohr (2) in einer zylindrischen Aufnahme (10) aufnimmt, die von einer Öffnung (11) quer durchbohrt wird, das Rohr (2) zwei Bohrungen (20) aufweist, die vis-à-vis angeordnet sind, wobei die Schraube (3) durch die Öffnung (11) und die beiden Bohrungen (20) verläuft und das Rohr (2) und den Träger (1) fest miteinander verbindet, die zylindrische Aufnahme (10) des Trägers (1) einen Längsschlitz (100) aufweist, der gegenüber der Öffnung (11) angeordnet ist, wobei der Schlitz (100) zwei innere Ränder, die auf der Seite der Aufnahme (10) angeordnet sind, und zwei äußere Ränder, die auf der der Aufnahme (10) gegenüberliegenden Seite angeordnet sind, aufweist und die Mutter (4) mindestens eine schräge Fläche (40, 41) aufweist, wobei jede Außenkante eine Winkelumlenkung (1010, 1020) aufweist, die mit der schrägen Fläche (40, 41) der Mutter (4) zusammenwirkt.

2. Befestigungsvorrichtung nach Anspruch 1, **dadurch gekennzeichnet, dass** die schräge Fläche konisch ist.

3. Befestigungsvorrichtung nach Anspruch 1, **dadurch gekennzeichnet, dass** die Mutter (4) zwei schräge Flächen (40, 41) hat, die gegenüber angeordnet sind.

4. Befestigungsvorrichtung nach einem der vorhergehenden Ansprüche, **dadurch gekennzeichnet, dass** das Rohr (2) und die zylindrische Aufnahme (10) einen kreisförmigen Querschnitt aufweisen.

5. Befestigungsvorrichtung nach einem der vorhergehenden Ansprüche, **dadurch gekennzeichnet, dass** der Träger (1) aus Metall ist.

6. Befestigungsvorrichtung nach einem der vorhergehenden Ansprüche, **dadurch gekennzeichnet, dass** das Rohr (2) aus Metall besteht.

7. Befestigungsvorrichtung nach einem der Ansprüche 1 bis 5, **dadurch gekennzeichnet, dass** das Rohr (2) aus einem Verbundmaterial besteht.

8. Befestigungsvorrichtung nach einem der vorhergehenden Ansprüche, **dadurch gekennzeichnet, dass** der Träger (1) ein Schaft ist.

9. Befestigungsvorrichtung nach dem vorhergehenden Anspruch, **dadurch gekennzeichnet, dass** der Schaft ein Element eines Sitzes bildet.

10. Sitz mit einer Befestigungsvorrichtung nach einem der vorhergehenden Ansprüche.

## Claims

1. A device for attaching a tube (2) onto a holder (1), comprising the tube (2), the holder (1), a through screw (3) and a nut (4), the holder (1) receiving the tube (2) in a cylindrical housing (10) transversely pierced by a port (11), the tube (2) having two piercings (20) facing each other, the screw (3) passing through the port (11) and the two piercings (20) and securing the tube (2) and the holder (1), **characterised in that** the cylindrical housing (10) of the holder (1) has a longitudinal slot (100) facing the port (11), the slot (100) having two inner edges disposed on the side of the housing (10) and two outer edges disposed on the side opposite the housing (10), the nut (4) including at least one inclined face (40, 41), each outer edge having a bell crank (1010, 1020) cooperating with the inclined face (40, 41) of the nut (4).

2. The attachment device according to claim 1, **characterised in that** the inclined face is conical.

3. The attachment device according to claim 1, **characterised in that** the nut (4) has two inclined faces (40, 41) facing each other.

4. The attachment device according to one of the preceding claims, **characterised in that** the tube (2) and the cylindrical housing (10) have a circular cross-section.

5. The attachment device according to one of the preceding claims, **characterised in that** the holder (1) is metallic.

6. The attachment device according to one of the preceding claims, **characterised in that** the tube (2) is metallic.

7. The attachment device according to one of claims 1 to 5, **characterised in that** the tube (2) is of composite material.

8. The attachment device according to one of the preceding claims, **characterised in that** the holder (1) is a bracket.

9. The attachment device according to the preceding claim, **characterised in that** the bracket is a component of a seat.

10. A seat comprising an attachment device according to one of the preceding claims.
